# EUROPEAN PATENT SPECIFICATION

(11) **EP 1 362 017 B1**
(45) Date of publication and mention of the grant of the patent: **29.06.2005**
(21) Application number: 02712087.2
(22) Date of filing: 19.02.2002
(51) Int. Cl.: C04B 7/28, C04B 28/08

(54) **CEMENTITIOUS MATERIAL**
ZEMENT-ARTIGES MATERIAL
MATERIAU CIMENTAIRE

(30) Priority: 19.02.2001 GB 0104091
(43) Date of publication of application: 19.11.2003
(73) Proprietor: UGCS Limited, Pontypridd, Mid Glamorgan CF37 1DL (GB)
(72) Inventor: WILD, Stanley, Pontypridd, Mid Glamorgan CF38 1TA (GB); KINUTHIA, John, Mungai, Cardiff CF24 3LY (GB); O'FARRELL, Martin, Cardiff CF 14 4QY (GB); SABIR, Bahir, Cyncoed, Cardiff CF23 6PN (GB); VEERAPPAN, Govindarajan, Mid Glamorgan CF37 1RW (US)
(74) Representative: Cawdell, Karen Teresa
(86) International application number: PCT/GB2002/000708
(87) International publication number: WO 2002/066392

(56) References cited:
- GB-A- 2 362 643
- US-A- 5 614 016

## Description

The present invention is concerned with a cementitious material suitable for use in the construction industry, a method of making a cementitious material, and products manufactured from the cementitious material.

Portland cement as a cementitious material is well established and widely used in industry. Portland cement provides a strong, relatively cheap and durable product (concrete/mortar).

The main constituents of Portland cement include Portland cement clinker (a hydraulic material which consists of two thirds by weight calcium silicates ((CaO)₃SiO₂ and (CaO)₂SiO₂, the remainder being calcium aluminates (CaO)₃Al₂O₃, and calcium ferro-aluminate (CaO)₄Al₂O₃Fe₂O₃ (and other oxides), minor additional constituents, such as granulated blast furnace slag, natural pozzolana, pulverised fuel ash (fly ash or filler), calcium sulfate and additives (which typically are less than 1% by weight of the final product).

However, Portland cement has the disadvantage that its production is a high energy intensive process that involves significant environmental damage due to the high level of carbon dioxide produced; there is also the problem of the acquisition of raw materials. In addition, Portland cement has a further disadvantage of being the most expensive component of concrete and mortar.

Ground Granulated Blast Furnace Slag (GGBS) is a by-product derived from waste slag, which is produced during the manufacture of pig iron from iron ore and limestone in a blast furnace. Blast furnace slag (a molten material composed from the gangue derived from the iron ore, the combustion residue of the coke, the limestone and other materials that are added) "floats" as a skin on top of the newly formed pig iron. The chemical composition of the slag can vary widely depending on the nature of the ore, composition of the limestone flux, coke composition and the type of iron being made.

In general the analysis is as follows: lime 30-50%, silica 28-38%, alumina 8-23%, magnesia 1-17%, sulfur 1-2.5% and ferrous and manganese oxides 1-3%. The molten slag is granulated by feeding it into jets of water. The rapidly cooled granulated solid consists of over 90% glass. The granules are ground to a fine powder to produce GGBS. GGBS is latently hydraulic, that is, it will hydrate if exposed to an alkaline environment.

In order to reduce the environmental impact of paper manufacture, increasing quantities of paper are being recycled. The part of the paper that is not recovered during recycling comprises a de-inking sludge; which is typically disposed of by landfill. The dry sludge comprises approximately equal amounts of organic and inorganic components, the latter consisting principally of limestone and kaolin. The latent energy of the organic component (mainly residual cellulose fibres) can be recovered by combustion of the sludge at temperatures in excess of 850°C, thereby reducing the volume of waste to be land-filled to around 40 or 50% of the original dry solids.

Waste materials as partial pozzolanic replacements for Portland cement have been widely documented. Such materials have been shown to be of great economic potential and are also beneficial to the environment in many areas of the construction industry. Although the use of Portland cement has been greatly reduced by partial replacement with waste materials, there is still a necessity to use Portland cement.

Wastepaper sludge ash which has been produced by "soaking" sludge at a constant temperature, in combination with ground granulated blast furnace slag, has been used as a partial replacement for Portland cement. However such known methods still require a considerable amount of Portland cement to be used which, as mentioned previously, is disadvantageous. Typically, previous methods require at least 50% Portland cement to be used.

In the UK the principal wastepaper recycling company (Aylesford Newsprint Ltd.) combusts wastepaper sludge in a fluidised bed and utilises the resultant energy to run and operate the plant. The resultant ash (approximately 700 tonnes/week) is currently dumped to landfill. Waste paper sludge includes kaolinite in the range 15-75% and also calcite in the range 21-70%. The composition is a function of the type, grade and quality of the paper being recycled.

The phase composition of the ash will be dependent on its thermal history. The phase composition of the ash varies greatly between ashes made by different methods, each type of ash having different properties.

US5614016 discloses a method and plant for burning sludge or filter cakes during cement clinker manufacture. GB2362643 discloses a cementitious material comprising waste paper sludge ash and waste glass.

It is therefore an aim of the present invention to alleviate some of the disadvantages highlighted above.

It is a further aim of the present invention to provide a cementitious material for use in, for example, the construction industry, which need not contain a high proportion of Portland cement, and therefore can be less detrimental to the environment, and also a method of making such a cementitious material.

It is a further aim of the present invention to provide a partial cement replacement.

It is yet a further aim of the present invention to provide a use of wastepaper sludge ash.

It is still yet a further aim of the present invention to provide a formed cementitious body.

Therefore, according to a first aspect of the present invention there is provided a hydratable cementitious composition which includes a blend of
(i) ground granulated blast furnace slag in an amount of 30% to 70% by weight of the blend; and
(ii) wastepaper sludge ash in an amount of 30% to 70% by weight of the blend, the wastepaper sludge ash being produced by heating wastepaper sludge to a combustion temperature in the range 900°C to 1200°C for a dwell time in the range 1 to 30 seconds, followed by cooling the heated sludge to a cooling temperature in the range 170°C to 230°C at the end of the dwell time.

Advantageously, the waste paper sludge ash used according to the present invention contains hydraulic components as well as pozzolonic components and has a relatively short setting time (which may be considered a disadvantage for normal concrete or mortar, but is an advantage for precast or premoulded components such as concrete blocks because of the necessity for short handling times).

Preferably the combustion temperature is at least 900°C. It is particularly preferred that the ash is produced by heating the sludge for a dwell time of about 1 to 30 seconds, further preferably about 3-5 seconds.

It is particularly preferred that, after the sludge has been heated it is cooled to a temperature in the range 170°C to 230°C (such as about 200°C) within about 2-6 seconds (preferably 3-5 seconds) of the end of the dwell time.

Waste paper sludge consists, after cellulose fibre removal and de-inking, of the surface coatings of the paper (inorganic materials, predominantly kaolinite and calcium carbonate, together with other trace clay minerals), plus any residual inks or fibres. It is particularly preferred that the wastepaper sludge ash (WSA), used according to the present invention is produced by the sludge entering a combustion zone with around 40% moisture so the flue gases generally consist of 25% water vapour (steam). Air is blown in at the bottom and it is occasionally necessary to burn gas in the air to preheat it. In the combustion zone the temperatures can vary between 850°C and 1200°C, being cooled towards the top. Generally the mixture will stay in the combustion zone for 3-5 seconds before going through a cooling zone which cools the gases to around 200°C in about 3-5 seconds. This is designed to produce extremely low levels of dioxins. For example three samples of ash taken from the combustor in September 1999 gave total ITEC (International Toxic Equivalents) values (ppt) ranging from 0.80ng/kg to 1.1ng/kg which is significantly below levels observed in ashes from other similar combustion processes (e.g. PFA).

The sludge used to obtain the Waste Paper Sludge Ash used in the invention is obtained from a sludge consisting essentially of (after cellulose fibre removal) kaolinite and calcium carbonate. This is heated rapidly in a fluidised bed to temperatures in excess of 1000°C for a period of a few seconds. It is then cooled rapidly to 200°C over a period of a few seconds. This is a non-equilibrium treatment, and results in a residual ash that contains a wide range of different phases and therefore differs from ashes used in prior art cementitious materials.

At temperatures above 600°C, the kaolinite undergoes dehydroxylation to metakaolin and the calcium carbonate in the sludge expels CO₂ to produce calcium oxide. At even higher temperatures the metakaolin and the calcium oxide react to produce crystalline gehlenite, anorthite and dicalcium silicate. On cooling, because of the short reaction time, reaction is incomplete and the ash therefore contains, in addition to the crystalline phases listed above, residual calcium oxide or free lime (typically about 5%), residual calcium carbonate (typically about 5%), residual (probably amorphous) aluminous/siliceous material (probably metakaolin or a degraded metakaolin) and quartz (mostly derived from the sand in the fluidised bed).

Wastepaper sludge calcined by soaking at 700-750°C (to give metakaolin and calcite) and used as a mineral admixture in high strength concrete is as an effective pozzolan as silica fume and metakaolin. However, the commercial process of combustion of wastepaper sludge in a fluidised bed (as with the ash used according to the present invention) is very different from soaking at a constant temperature.

Quicklime and metakaolin react (depending on the temperature and soaking time) to form a wide range of calcium alumino-silicate phases. The two principal phases are gehlenite (Ca₂Al₂SiO₇) and anorthite (CaAl₂Si₂O₈), although at high calcite to kaolin ratios dicalcium silicate replaces anorthite. Dicalcium silicate has hydraulic/latent hydraulic properties depending on its particular form whereas gehlenite and anorthite are considered to be non-hydraulic.

On the addition of water the ash (WSA) hydrates, sets (typically in a few minutes) and hardens. The hydration products comprise crystalline calcium hydroxide, both crystalline calcium aluminate hydrates and alumino-silicate hydrates (typically C₄AH₁₃, C₃A.0.5CC.0.5CH.H_{11.5} and C₂ASH₈) and amorphous C-S-H/C-A-S-H gel. The hydration products are formed both as a result of direct hydration of components in the ash and also by pozzolanic action between calcium hydroxide and the amorphous aluminous/siliceous material. The strength development of the hydrated material can be improved and the setting time increased by blending the WSA with GGBS. The GGBS hydration is activated by the free lime in the WSA and also consumes some of the free lime. It also increases the setting time of the WSA, which sets very rapidly after adding water. The GGBS also improves the quality of the cementitious gel formed during hydration. When WSA hydrates on its own the hydrated paste is very porous and the pores very coarse. By combining the WSA with GGBS, providing lime is present, the hydrated paste becomes less porous and has a finer microstructure, which is why there is a marked improvement in strength development when WSA is blended with GGBS.

The combustion method used is dictated by two factors:
utilisation of the waste heat, which is most efficiently achieved by use of a fluidised bed; and
minimisation of dioxin levels, which means that the gases have to be cooled rapidly to about 200°C to prevent such dioxins forming.

The calcining temperature of the wastepaper sludge in a fluidised bed combustor is in part determined by the particular energy recovery system adopted (if employed) and also by the requirement of a maximum allowable limit for dioxin emissions. In addition the resultant ash is known to be quite highly alkaline (pH 11-12) which is a result of residual free lime.

Advantageously, in the presence of water, the calcium oxide hydrates to calcium hydroxide, which itself reacts with the amorphous or semi-amorphous silica and alumina containing components in the ash including any residual metakaolin to form cementitious calcium aluminate hydrates, calcium alumino-silicate hydrates and calcium silicate hydrates.

Advantageously, the calcium hydroxide creates the alkaline environment necessary for the activation of GGBS to produce a cementitious product.

Advantageously, the calcium silicates hydrate to form cementitious calcium silicate hydrates.

As mentioned previously, ashes made from soaking waste paper sludge ash at a temperature between 600°C and 850°C would consist, depending on the temperature and soaking time of:
(i) metakaolin and calcium carbonate,
(ii) metakaolin, calcium carbonate and calcium oxide, or
(iii) metakaolin and calcium oxide.

At about 850°C some very small amounts of gehlenite and anorthite may be present due to a small amount of reaction between calcium oxide and metakaolin.

However, the ash used according to the present invention, due to the higher temperature and short heating time contains dicalcium silicate, gehlenite, anorthite and residual amorphous or semi-amorphous silica and alumina based material and small amounts of calcium oxide and calcium carbonate. It is therefore both hydraulic/semihydraulic (due to the dicalcium silicate) and pozzolanic (due to the residual amorphous or semi-amorphous silica and alumina based material which reacts with calcium hydroxide to form cementitious products.

Accordingly, the present invention extends to a hydratable cementitious composition which includes a blend of
(i) wastepaper sludge ash substantially having the composition 19-32.5% SiO₂, 12.75-26.25% Al₂O₃, 0.3-3.5% Fe₂O₃, 30-56% CaO, 3.3-6.75% MgO, 0.75-2.5% Na₂O, 0.75-2.5% K₂O, and 0.3-1.9% SO₃, the remainder being other oxides, incidental ingredients and impurities; and
(ii) ground granulated blast furnace slag.

Preferably, the ash has a composition of 20.5-31.0% SiO₂, 15.0-22.7% Al₂O₃, 0.7-1.1% Fe₂O₃, 34.8-52.2% CaO, 4.1-6.2% MgO, 1.2-2.0% Na₂O, 1.0-1.6% K₂O, 0.8-1.4% SO₃, the remainder being other oxides, incidental ingredients and impurities.

A Particularly preferred composition for the ash is 25.2-26.2% SiO₂, 18.4-19.4% Al₂O₃, 0.4-1.4% Fe₂O₃, 43-44.0% CaO, 4.7-5.7% MgO, 1.1-2.1% Na₂O, 0.8-1.8% K₂O, 0.6-1.6% SO₃, the remainder being other oxides, incidental ingredients and impurities.

It is preferred that the waste paper sludge ash has an average particle size diameter of less than about 50µm; further preferably less than about 30µm. The particle size may conform to this condition when the waste paper sludge ash is formed, or alternatively, it may be obtained by grinding or the like.

It is preferred that the blend initially includes about 30% to 70% wastepaper sludge ash by weight of the blend, and about 70% to 30% ground granulated blast furnace slag by weight of the blend. Further preferably, the blend includes about 40-60% waste paper sludge ash, and about 60-40% ground granulated blast furnace slag.

The blend may further include Portland cement. When Portland cement is present, it is particularly preferred that the Portland cement is present in an amount of no more than about 25% of the blend, by weight. A particularly, preferred blend includes about 40% ash, about 40% ground granulated blast furnace slag and about 20% Portland cement, all amounts being percentage by weight of the blend.

It is envisaged that the blend may include an activator, which is arranged to increase the pH of the blend. The activator may be Portland cement (as discussed above). Alternatively/or additionally, the activator may be an inorganic compound such as sodium carbonate, potassium carbonate, sodium sulfate or potassium sulfate. When the activator is an inorganic compound it is present in amount of 0.5 to 10(preferably 0.5-5.0%) by weight of the blend. The inorganic compound is typically added to the mixing water.

The blend typically includes additives such as plasticisers and/or retarders, for example the superplasticiser 'Daracem SP1' (which is based on a soluble salt of polymeric naphthalene) and/or calcium sulfate. The addition of additives advantageously improve workability and compaction properties of the resultant cementitious material and also controls the setting time of the cementitious material.

The blend is typically mixed with sand (preferably in a ratio of about 1 part cementitious material to about 3 parts sand) so as to provide a mortar.

The blend is typically mixed with sand and aggregate (preferably in the ratio of about 1 part binder: 2 parts sand: 3 parts aggregate), so as to provide a concrete material.

According to a further aspect of the present invention, there is provided a method of manufacturing a cementitious composition which includes providing a blend of wastepaper sludge ash and ground granulated blast furnace slag, according to the first aspect of the present invention, and preferably hydrating the blend.

The cementitious composition is typically subjected to vibration and/or external pressure so as to provide a formed body.

According to the first aspect of the present invention typically, the hydrated blend is water cured or moisture cured.

Accordingly, there is provided a formed body which is manufactured from hydrating a hydratable cementitious composition.

According to a further aspect of the present invention, there is provided a use of wastepaper sludge ash and ground granulated blast furnace slag, as a partial replacement for Portland cement in the manufacture of cementitious materials, the ash is produced by heating wastepaper sludge to combustion temperature in the range 900°C to 1200°C for a dwell time in the range 1 to 30 seconds, followed by cooling the heated sludge to a cooling temperature in the range 170°C to 230°C at the end of the dwell time, wherein the waste paper sludge ash is present in an amount in the range 30% to 70% by weight of the composition.

According to yet a further aspect of the present invention, there is provided a formed cementitious body which is manufactured from a hydrated blend of wastepaper sludge ash and ground granulated blast furnace slag. The wastepaper sludge ash is substantially as described hereinbefore.

The formed body is typically for use in the construction industry. The formed body may be a block, brick or the like.

According to still yet a further aspect of the present invention there is provided a method of manufacturing a formed cementitious body, the method includes:
(a) providing a blend of
   (i) ground granulated blast furnace slag in an amount of 30% to 70% by weight of the blend; and
   (ii) wastepaper sludge ash in an amount of 30% to 70% by weight of the blend, the wastepaper sludge ash being produced by heating wastepaper sludge to a combustion temperature in the range (950)°C to 1200°C for a dwell time in the range 1 to 30 seconds, followed by cooling the heated sludge to a cooling temperature in the range 170°C to 230°C at the end of the dwell timeground granulated blast furnace slag in an amount of 30% to 70% by weight of the blend; and
   (i) wastepaper sludge ash in an amount of 30% to 70% by weight of the blend, the wastepaper sludge ash being produced by heating wastepaper sludge to a combustion temperature in the range (950)°C to 1200°C for a dwell time in the range 1 to 30 seconds, followed by cooling the heated sludge to a cooling temperature in the range 170°C to 230°C at the end of the dwell time
(b) hydrating the blend;
(c) shaping the blend; and
(d) permitting the blend to cure.

The blend is preferably substantially as described herein before with reference to the first aspect of the present invention.

It is envisaged that the blend in (a) may optionally contain Portland cement.

It is envisaged that the blending may be carried out in a mould, or in a separate vessel. The curing can advantageously be carried out in the mould, or subsequent to demoulding.

It is preferred that the blend is cured for at least 7 days.

According to yet a further aspect of the present invention, there is provided a hydratable cementitious composition which includes a blend of Portland cement and wastepaper sludge ash, or a blend of Portland cement, wastepaper sludge ash and ground granulated blast furnace slag. The waste paper sludge ash is substantially as described hereinbefore.

According to yet a further aspect of the present invention, there is provided a use of wastepaper sludge ash, or a blend of wastepaper sludge ash and ground granulated blast furnace slag, wherein the ash has been produced by heating wastepaper sludge to a combustion temperature in the range 850°C to 1200°C for a dwell time in the range 1 to 60 seconds, and ground granulated blast furnace slag, as a partial replacement of Portland cement in the manufacture of cementitious materials.

According to yet a further aspect of the present invention there is provided a cementitious composition which includes wastepaper sludge ash which has been produced by heating wastepaper sludge to a combustion temperature in the range 850°C to 1200°C for a dwell time in the range 1 to 60 seconds.

The present invention is now illustrated, by way of example only, by the following examples:

### Waste Paper Sludge Ash (WSA)

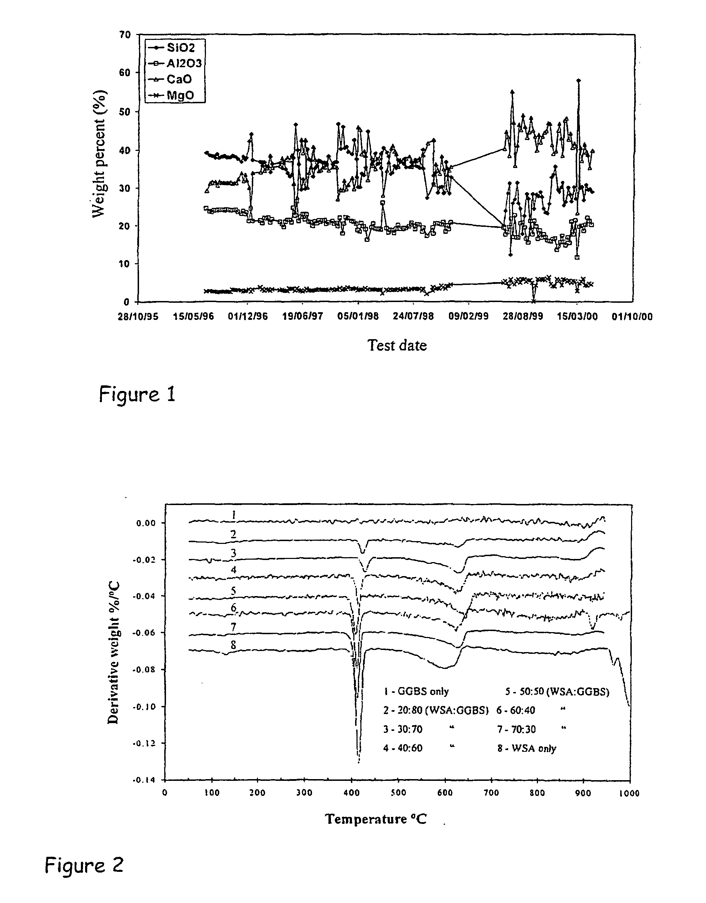

The WSA was supplied by Aylesford Newsprint Limited (ANL) in the form of a dry powder. The variation in major oxide content (CaO, SiO₂, Al₂O₃, and MgO) of WSA during the period June 1996 - May 2000 is given in Figure 1 which shows the variation of major oxide component of WSA with time. Over this period the CaO content increased from about 30% to 45% and the SiO₂ content decreased from about 40% to 25%. The Al₂O₃ content also decreased from about 25% to 20%, whilst the MgO content increased slightly to about 6%. An example of oxide content, for WSA tested in June 1999, is given in Table 1 which shows the Chemical composition and physical properties of GGBS and Portland Cement.

**Table 1.**

| *Chemical compositions of WSA, GGBS and PC* | | | |
|---|---|---|---|
| Composition (%) | | | |
| **Oxide** | **WSA*** | **GGBS** | **PC** |
| CaO | 42.71 | 42.0 | 65.6 |
| SiO₂ | 24.17 | 35.5 | 21.0 |
| Al₂O₃ | 18.39 | 12.0 | 4.63 |
| MgO | 5.04 | 8.0 | 1.18 |
| Fe₂O₃ | 1.77 | 0.4 | 2.26 |
| SO₃ | 1.08 | 0.2 | 2.69 |
| Insoluble Residue | - | 0.3 | 0.30 |

| | | | |
|---|---|---|---|
| *determined by A.N.L. June 1999. | | | |

Data determined by Malvern Instruments Limited with a Mastersizer 2000 unit on a randomly selected WSA sample gave an average particle size of 138.1µm and a specific surface of 125.9 m²/kg. The coarseness is attributed to the fact that the much coarser bottom ash from the fluidised bed system is mixed with the fine ash extracted from the flue gases before entering the storage silo. The WSA was first ground for 5 minutes in 1kg batches in a Mixermill 2000 unit, which reduced the average particle size diameter from 138.1µm to 24.5µm. The specific surface of the WSA increased from 125.9 to 646.3m²/kg. The XRD analysis of the ash shows that the crystalline phases present in the dry WSA are quartz, anorthite, gehlenite, dicalcium silicate, calcite and some evidence of quicklime. The relative intensities of the various diffraction peaks suggest that, of the crystalline phases in the ash, quartz and gehlenite are the major phases present.

Samples of WSA (of the same batch whose crystalline phases were identified by XRD) were also analysed for their soluble oxide components. The analysis was in accordance with BS 1881:Part 124, which is the standard test for determination of cement in concrete. The results given in Table 2 indicate that the amount of soluble silica in the WSA is almost 24%, which indicates that of the silica present, a substantial proportion is reactive. There is a similar amount (about 24%) of insoluble residue present in the WSA sample which comprises quartz, anorthite and gehlenite (detected with XRD). The data indicate a deficiency of about 15% and this most probably is made up of "soluble" Al₂O₃, MgO and Fe₂O₃.

**Table 2**

| Chemical Analysis of WSA | |
|---|---|
| **Component** | **Weight %** |
| Insoluble Residue | 23.35 |
| Soluble Silica (SiO₂) | 23.95 |
| Calcium Oxide (CaO) | 35.35 |
| Carbonate as CO₂ | 2.09 |
| Sulfate as SO₃ | 0.97 |
| **Total** | **85.71** |

### Ground Granulated Blast-furnace Slag (GGBS) and other Materials.

The GGBS used for the current work was supplied by Civil and Marine Slag Cement Limited and its chemical composition is given in Table 1. A standard Portland cement (to BS12, see Table 1), supplied by Rugby Cement Group Limited, was used for the control mixes. Sand, dredged from the Bristol Channel, was used as fine aggregate. Its particle size ranged from 0.25 to 1.71mm. The coarse aggregates (10mm) were limestone from Aberkenfig quarry in South Wales and both aggregates conformed with the BS812, BS882 and BS8110. In order to obtain a concrete workability with WSA-GGBS blends as binder, that would be close to that obtained with Portland Cement alone (30-60mm slump), a superplasticiser Daracem SP1 was used. The superplasticiser was supplied by W.R. Grace Limited. It is based on the soluble salt of polymeric naphthalene sulfonate and conforms with ASTM designation C494 and also complies with BS 5075: Parts 1 and 3.

### Experimental

### Blend Compositions

After the initial grinding of WSA, five different blends were prepared. The proportions of WSA to GGBS used were: 20:80, 30:70, 40:60, 50:50 and 60:40 (Later, A 70:30 blend was added to the research on concrete). Batches of 1kg were prepared by inter-grinding the relevant quantities of WSA and GGBS together for a further one minute in the Mixermill to ensure a homogenous mix. Thermogravimetric analysis (TGA) of both the dry powder blends and the hydrated blended pastes were carried out on paste specimens prepared at a w/b ratio of 0.5 using hour glass-shaped briquette moulds. After de-moulding, the specimens were water cured for 3,7,28 and 90 days after which they were dried to constant weight over silica gel and Carbosob (a carbon dioxide absorbing agent). The specimens were then broken and internal pieces were selected for grinding and the resulting powder further dried as before. Thermal analysis was conducted using a TA Instruments TGA 2950 thermogravimetric analyser in a dry nitrogen atmosphere (on samples whose weight ranged from 4-10mg) with a heating rate of 10°C/min. In order to fully characterise the hydration products, a high resolution ramp was applied below 300°C, followed by a constant temperature ramp up to 950-1000°C.

### Compressive Strength

**Mortar**: The various blends investigated (WSA: GGBS = 20:80, 30:70, 40:60, 50:50, 60:40) were employed as the binder for a mortar generally complying with EN 196-1. The mortar mix (which was also used for sulfate expansion tests) had a 1:3 (binder:sand) ratio and the w/b ratio used (0.65) was higher than specified in the standard (0.5) due to the high water demand at high WSA contents. Mortar cubes were cast in 50mm steel moulds, covered with cling film to prevent moisture loss and after 24 hours demoulded. For each blend, half the cubes were water cured and half were moist cured (wrapped in cling film and stored over water) and were tested in compression at 1,7 and 28 days.

**Concrete**: For research on concrete, the 20:80 blend was replaced by a 70:30 blend. Concrete mixtures with a binder:sand:aggregate ratio 1:2:3 were made up at w/b ratios of 0.5 and 0.4 and tested for slump. Concrete cubes were cast in 100mm steel moulds, covered with cling film, de-moulded at 24 hours and cured in water for 1,7,28 and 90 days. They were tested in compression using a Denison Mayes Group testing machine at compression rates of 45 kN/min (mortar) and 180 kN/min (concrete). Each reported value is the average of three separate results. A superplasticiser was used to achieve workability close to that of the Portland cement control concrete mix. The demand for superplasticiser (unnecessary at 30:70 composition) increased according to the amount of WSA present in the concrete mix. Without the use of the superplasticiser, the high WSA:GGBS ratio mixtures set so rapidly that they were completely unworkable.

### Exposure to Sodium Sulfate Solution

The binder compositions employed ranged from 20:80 to 50:50 and Portland cement was used for the control mortar. Both mortar prisms (20mm x 20mm x 160mm) and mortar cubes (50mm) were produced using the same procedures as described above for mortar. After 28 days of water curing the lengths of the mortar prisms were determined before being immersed, along with the cubes, in the relevant solutions (de-ionised water, or sodium sulfate solution of concentration 16.0 ±0.5g SO₄ per litre). At each test interval (28 days) the length of each mortar prism was determined using a comparator, the sodium sulfate solution was renewed, and the deionised water level was adjusted to maintain a volume of one litre. After 142 days exposure the compressive strengths of the mortar cubes were determined.

### RESULTS

### Thermogravimetric (TG) Analysis

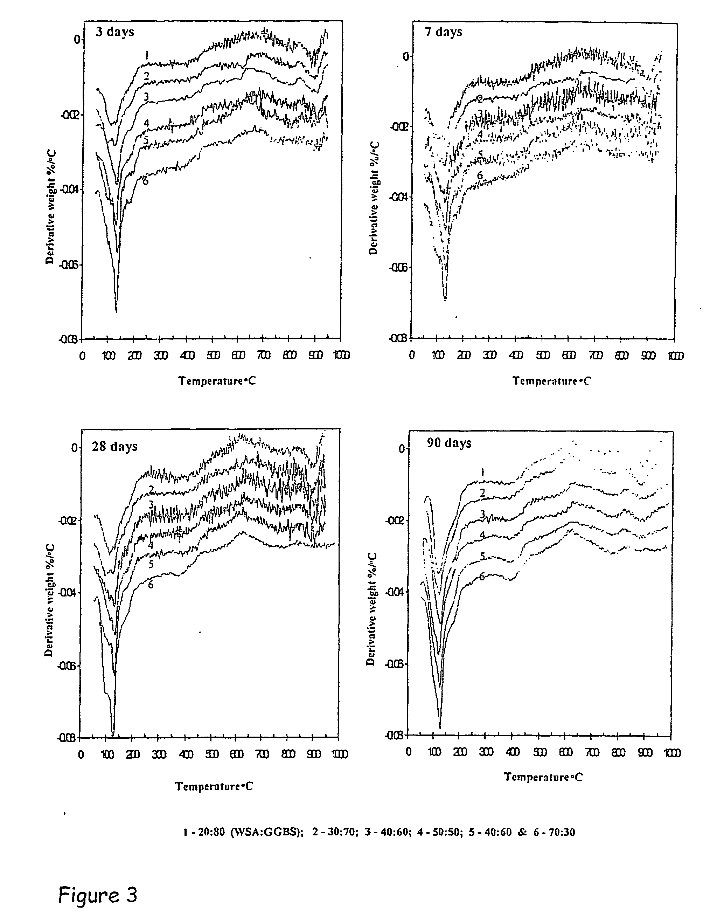

Figure 2 shows the TG analysis of the dry WSA:GGBS blends for temperatures of up to 1000°C. All blends show a peak at 400-450°C, due to dehydroxylation of hydrated lime (CH,≈ 3.4% by wt of WSA) in the WSA (formed due to hydration of CaO during exposure to air). The broad peak at about 600°C is identified as being due to carbonate decomposition (CaCO₃ ≈1.4% by wt of WSA) confirmed by the observation of calcite in XRD traces and of carbonate in the chemical analysis. This low decomposition temperature may be a result of the small amount of carbonate present in the WSA, and the presence of sulfate (see Table 1). It has previously been reported that possible SO₂ displacement reactions with calcite which release CO₂ from carbonate minerals below their temperatures of decomposition occur. The TG analysis of the hydrated blends cured in water for up to 28 days are shown in Figure 3. Both the lime and calcite peaks are absent at 3 days of hydration and are replaced by peaks in the range 70-200°C. The paste blends with 20:80 and 30:70 compositions show two main peaks, at 100°C and at 120°C. These are thought to represent ettringite and C-S-H gel respectively. Both WSA and GGBS contain some sulfate, 0.97 and 0.2% respectively, thus most of the sulfate probably derives from the WSA. In fact the weight loss in this temperature region does increase with increasing WSA content although this fact is rather masked by the relatively higher peak due to C-S-H gel, particularly for paste blends with WSA content higher than 30%. At these high WSA contents, a third peak is observable at about 180°C that also increases with increasing WSA content and is thought to be due either to formation of gehlenite hydrate or a carbo-aluminate hydrate. Between 28 days and 90 days a further peak develops at 350-380°C which may be due to hydrogarnet formation.

### Compressive Strength

**Mortar**: Table 3 shows the compressive strengths of the water cured and moist cured mortars for up to 28 days and also the strengths relative to Portland cement mortar at the same age. At 1 day compressive strengths are very low but as curing periods increase to 28 days strengths increase significantly relative to those of Portland cement mortar, indicating substantial cementing activity. In particular, water cured mortar with a binder composition of 60:40 achieves a 28 day strength (15.0 MPa) in excess of 50% of the strength of the control Portland cement mortar (28.8 MPa). In general the strengths of moist cured mortars are rather smaller than the strengths of equivalent water cured mortars and in particular the mortar with a 60:40 binder composition shows a much lower strength when moist cured as opposed to water cured.

**Table 3**

| Strength of WSA-GGBS mortar (MPa)(relative strengths in parenthesis) | | | | | | | |
|---|---|---|---|---|---|---|---|
| Curing period (days) | Curing Regime | **Mix Composition** (WSA:GGBS) | | | | | |
| | | 20:80 | 30:70 | 40:60 | 50:50 | 60:40 | PC |
| 1 | moist water | 0.2(0.02) 0.2(0.02) | 0.7(0.06) 1.0(0.09) | 1.1(0.10) 1.4(0.13) | 1.2(0.11) 1.4(0.13) | 0.5(0.04) 1.5(0.14) | 11.6 11.1 |
| 7 | moist water | 4.8(0.22) 3.9(0.19) | 5.8(0.26) 6.2(0.30) | 6.9(0.31) 7.7(0.38) | 7.6(0.35) 7.8(0.38) | 3.7(0.17) 8.9(0.43) | 22.1 20.5 |
| 28 | moist water | 12.2(0.40) 12.1(0.42) | 12.7(0.41) 13.0(0.45) | 12.1(0.39) 12.4(0.43) | 12.0(0.39) 13.4(0.45) | 9.5(0.31) 15.0(0.52) | 30.8 28.8 |

**Concrete**: The compressive strengths of WSA-GGBS concrete at w/b ratios of 0.5 and 0.4 are summarised in Table 4. It is seen that beyond one day, the concretes with the 50:50 binder compositions at both w/b ratios develop the highest strength. Further increases in WSA:GGBS ratio give lower strengths. For binder compositions up to 50:50, lowering the w/b ratio from 0.5 to 0.4 generally produces increased strength although the advantage of the lower w/b ratio decreases with increasing WSA:GGBS ratio. Above a 50:50 composition ratio the strengths of concrete with w/b ratio 0.4 decline more rapidly with increase in WSA:GGBS ratio than do those for concrete with w/b ratio 0.5. Thus at composition 70:30 the strengths at w/b ratio 0.4 are substantially less than at w/b ratio 0.5. It is suggested that this is a result of the much higher water demand and poorer compaction at high WSA:GGBS ratios.

**Table 4**

| Strength of WSA-GGBS concrete (MPa) at w/b ratios of 0.5 and 0.4 (relative strengths of parenthesis). | | | | | | | |
|---|---|---|---|---|---|---|---|
| Curing period (days) | w/b ratio | | | **Mix Composition** | | | |
| | | | | (WSA:GGBS) | | | |
| | | 30:70 | 40:60 | 50:50 | 60:40 | 70:30 | PC |
| 1 | 0.5 | 0.6(0.02) | 0.4(0.01) | 0.6(0.02) | 0.6(0.02) | 1.2(0.04) | 30.5 |
| | 0.4 | 0.7(0.01) | 1.0(0.02) | 1.3(0.02) | 0.8(0.02) | 1.5(0.03) | 52.3 |
| 7 | 0.5 | 10.8(0.21) | 8.6(0.17) | 11.0(0.21) | 7.7(0.15) | 10.5(0.21) | 51.1 |
| | 0.4 | 10.2(0.16) | 9.6(0.15) | 11.9(0.18) | 4.0(0.06) | 5.6(0.09) | 64.9 |
| 28 | 0.5 | 16.8(0.29) | 16.3(0.28) | 19.0(0.33) | 15.2(0.26) | 16.9(0.29) | 58.1 |
| | 0.4 | 18.0(0.24) | 18.9(0.25) | 20.7(0.28) | 16.4(0.22) | 12.5(0.17) | 75.1 |
| 90 | 0.5 | 22.7(0.35) | 24.0(0.37) | 27.1(0.42) | 23.4(0.36) | 22.7(0.35) | 65.0 |
| | 0.4 | 26.8(.034) | 26.2(0.33) | 27.0(0.34) | 22.7(0.29) | 17.5(0.29) | 79.8 |

The strength of concrete made with WSA-GGBS as binder is substantially below that made with Portland cement (Table 4), the former achieving the highest relative strength value of 0.42 for the 50:50 blend. Also the rate of early strength development is much slower for the WSA:GGBS concrete. For example, at 1 day concrete made with Portland cement, achieved about 52% (w/b ratio 0.5) and 72% (w/b ratio 0.4) of its strength at age 28 days, while concrete with WSA:GGBS binders achieved only 2-6% of the 28 day strength for both w/b ratios. However the strength of WSA:GGBS concrete shows substantial improvement between 1 and 28 days and continues to show significant increase up to 90 days.

### Sulfate Expansion and Strength Mortar

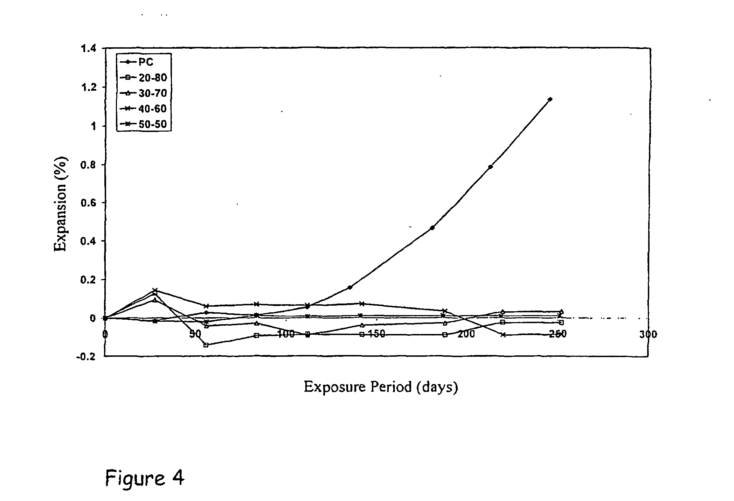

Figure 4 shows the expansion of WSA:GGBS mortars (of various compositions) exposed to sodium sulfate solution for up to 250 days. After 112 days exposure the control (i.e. Portland cement mortar) shows rapid increase in expansion. This relatively short time period prior to the onset of expansion of the Portland cement mortar is a result of the high w/b ratio (0.65)used in these mixes. The WSA:GGBS mortars, regardless of composition, show no significant expansion, nor are there any visible signs of deterioration.

The compressive strengths of the mortars, water cured for 28 days and then exposed to either sodium sulfate solution or water for 142 days are shown in Table 5. Little difference is apparent between the strengths of mortar cubes exposed to sodium sulfate solution and those stored in water. However testing took place at the exposure period when the Portland Cement mortar had just begun to show significant expansion and the WSA:GGBS mortars had shown no expansion. If testing had been delayed for a much longer period then it is anticipated that the sulfate exposed Portland cement mortar would have shown much reduced strength. It is of interest to note that the strengths of mortar exposed to both sodium sulfate solution and water (for 142 days) decrease with increasing WSA content. This trend is opposite to that observed for mortar cubes cured in water and tested in compression at 28 days (see Table 3). Also the strengths relative to Portland cement mortar are much higher after 142 days than at 28 days particularly for the high GGBS:WSA ratio blended mortars. This behaviour indicates the increasing influence with age, of GGBS on WSA:GGBS mortar strength, and suggests that WSA contributes significantly to strength between 1 and 28 days and the GGBS contributes significantly to strength beyond 28 days. In addition, poorer compaction at high WSA:GGBS ratios may be retarding the strength development of these mortars although the higher w/b ratio (0.65) of the mortars means that this is much less of a problem with the mortars than with the concretes (w/b 0.4 and 0.5).

**Table 5**

| Strength of WSA-GGBS mortar (MPa) exposed to sodium sulfate solution or deionised water for 142 days (relative strengths in parenthesis) | | | | | | |
|---|---|---|---|---|---|---|
| Curing Regime | **Mix Composition** | | | | | |
| | (WSA:GGBS) | | | | | |
| | 20:80 | 30:70 | 40:60 | 50:50 | 60:40 | PC |
| sulfate water | 21.6(0.86) 23.2(0.87) | 20.4(0.81) 21.2(0.79) | 17.6(0.70) 16.4(0.61) | 15.2(0.60) 18.0(0.67) | 13.6(0.54) 14.8(0.55) | 25.2 26.8 |

### Cementation, Strength Development and Sulfate Resistance

The XRD and chemical analysis suggest that WSA has a significant silica containing amorphous content and the thermogravimetric analysis confirms that hydration does take place evidenced by the observation of increasing amounts of C-S-H gel with increasing WSA levels in the blends. The apparently low free lime content of the WSA suggests that the gel derives mainly from hydration of a component in the WSA rather than from pozzolanic reaction with the lime. The strength data indicate that the WSA contributes to strength development both by hydrating itself and by activating hydration of the slag. Strength data on the mortar support the view that the WSA makes its major contribution to strength between 1 and 28 days and the slag makes its major contribution beyond 28 days. The high water demand of the WSA has a significant influence on compaction and strength development of concrete produced with the blends. Work by the authors on setting times of pastes made from the blends (not reported here), show very rapid setting at high WSA-GGBS ratios. Because of this it is not possible, over the normal range of w/b ratios, to produce a workable paste from WSA-water mixtures alone. However, when good compaction is achieved, in for example the mortars, 28 day strengths in excess of 50% of the equivalent mixture can be obtained. Mortars made up using a wide range of WSA-GGBS blends show negligible sulfate expansion up to 1 year. Further work is in progress to study the influence of retarders/plasticisers on setting times and workability.

## Claims

1. A hydratable cementitious composition which includes a blend of:
(iii) ground granulated blast furnace slag in an amount of 30% to 70% by weight of the blend; and
(iv) wastepaper sludge ash in an amount of 30% to 70% by weight of the blend, the wastepaper sludge ash being produced by heating wastepaper sludge to a combustion temperature in the range 900°C to 1200°C for a dwell time in the range 1 to 30 seconds, followed by cooling the heated sludge to a cooling temperature in the range 170°C to 230°C at the end of the dwell time.

2. A hydratable cementitious composition according to claim 1, wherein the dwell time is in the range 3 to 5 seconds.

3. A hydratable cementitious composition according to claims 1 or 2, wherein the heated wastepaper sludge is cooled to the cooling temperature within 2-6 seconds of the end of the dwell time.

4. A hydratable cementitious composition according to Claim 3, wherein the sludge has been cooled to a temperature of about 200°C within 2-6 seconds at the end of the dwell time.

5. A hydratable cementitious composition according to any preceding claim, wherein the wastepaper sludge ash substantially has the composition 19-32.5% (such as 20.5-31.0%) SiO₂, 12.75-26.25% (such as 15-22.7%) Al₂O₃, 0.3-3.5% (such as 0.7-1.1), Fe₂O₃, 30-56% (such as 34.8-52.2) CaO, 3.3-6.75% (such as 4.1-6.2) MgO, 0.75- 2.5% (such as 1.1 to 2.0%) Na₂O, 0.75-2.5% (such as 1.0 - 1.6%) K₂O, and 0.3-1.9% (such as 0.8-1.4%) SO₃, the remainder being other oxides, incidental ingredients and impurities.

6. A hydratable cementitious material according to any preceding claim which has an average particle size diameter of less than about 50µm (such as less than about 30µm).

7. A hydratable cementitious material according to claim 6, wherein the particle size preferably conforms to this condition when the wastepaper sludge ash is formed, or it may be obtained by grinding or pounding.

8. A hydratable cementitous material according to any preceding claim, wherein the blend initially includes about 30% to 70% (preferably 40-60%) waste paper sludge ash by weight of the blend, and about 70% to 30% (60%-40%) ground granulated blast furnace slag by weight of the blend.

9. A hydratable cementitious material according to any preceding claim which further includes an activator which may include Portland Cement and/or an inorganic compound (such as sodium carbonate, potassium carbonate, sodium sulfate or potassium sulfate).

10. A hydratable cementitious material according to claim 9, wherein the inorganic compound is present in an amount of 0.5 to 10.0% by weight of the blend and/or Portland cement is present in an amount 0.5% to 25% of the blend, by weight.

11. A hydratable cementitious material according to claim 7, wherein the blend includes about 40% wastepaper sludge ash, about 40% ground granulated blast furnace slag and about 20% Portland cement, all amounts being percentage weight of the blend.

12. A hydratable cementitious material according to any preceding claim, wherein the blend includes one or more additives, such as a superplasticiser based on a soluble salt of polymetric naphthalene or calcium sulfate.

13. A hydratable cementitious material according to any preceding claim which is mixed with sand (preferably in a ratio of about 1 part cementitious material to about 3 parts sand) so as to provide a mortar.

14. A hydratable cementitious material according to any preceding claim which is mixed with sand and aggregate (preferably in the ratio of about 1 part binder: 2 parts sand: 3 parts aggregate), so as to provide a concrete material.

15. A method of manufacturing a cementitious composition which includes providing a hydratable cementitious composition according to any of claims 1 to 14, and hydrating the blend.

16. A method according to claim 15, wherein the cementitious composition is subjected to vibration and/or external pressure so as to provide a formed body.

17. A method according to claim 15 or 16 wherein the hydrated blend is water cured or moisture cured.

18. A formed body which is manufactured from hydrating a hydratable cementitious composition according to any of claims 1 to 14.

19. A formed body according to claim 18, which is for use in the construction industry and may be in the form of a block or brick.

20. A method of manufacturing a formed body which method includes:
(a) providing a hydratable cementitious material according to any of claims 1 to 14;
(b) hydrating the blend;
(c) shaping the blend; and
(d) permitting the blend to cure.

21. A method according to claim 20, wherein the blend includes Portland cement.

22. A method according to claim 20 or 21, wherein the shaping is carried out in a mould.

23. A method according to any of claims 20 to 22, wherein the blending is carried out in a mould, or in a separate vessel.

24. A method according to any of claims 20 to 23, wherein the curing is carried out in the mould or subsequent to demoulding.

25. A method according to any of claims 20 to 24, wherein the blend is cured for at least 7 days.

26. Use of a blend of waste paper sludge ash and ground granulated blast furnace slag, as a partial replacement for Portland cement in the manufacture of cementitious materials, the ash is produced by heating wastepaper sludge to combustion temperature in the range 900°C to 1200°C for a dwell time in the range 1 to 30 seconds, followed by cooling the heated sludge to a cooling temperature in the range 170°C to 230°C at the end of the dwell time, wherein the waste paper sludge ash is present in an amount in the range 30% to 70% by weight of the composition.

27. Use of waste paper sludge ash as a cementitious binder in the manufacture of a cementitious material comprising waste paper sludge ash and ground granulated blast furnace slag, wherein the waste paper sludge ash is produced by heating wastepaper sludge to a combustion temperature in the range 900°C to 1200°C for a dwell time in the range 1 to 30 seconds, followed by cooling the heated sludge to a cooling temperature in the range 170°C to 230°C at the end of the dwell time, the waste paper sludge ash being present in an amount in the range 30% to 70% by weight of the cementitious material.

## Patentansprüche

1. Hydratisierbare zementartige Zusammensetzung, enthaltend eine Mischung aus:
(iii) gemahlener granulierter Hochofenschlacke in einer Menge von 30 bis 70 Gewichts-% der Mischung;
(iv) Altpapierschlammasche in einer Menge von 30 bis 70%-Gewicht der Mischung, wobei die Altpapierschlammasche hergestellt ist durch Erwärmen von Altpapierschlamm auf eine Verbrennungstemperatur im Bereich von 900 °C bis 1200 °C für eine Haltezeit im Bereich von 1 bis 30 Sekunden, mit anschließendem Abkühlen des erwärmten Schlamms auf eine Kühltemperatur im Bereich von 170 °C bis 230 °C am Ende der Haltezeit.

2. Hydratisierbare zementartige Zusammensetzung nach Anspruch 1, wobei die Haltezeit im Bereich von 3 bis 5 Sekunden liegt.

3. Hydratisierbare zementartige Zusammensetzung nach Anspruch 1 oder 2, wobei der erwärmte Altpapierschlamm innerhalb von 2-6 Sekunden nach dem Ende der Haltezeit auf die Kühltemperatur abgekühlt wird.

4. Hydratisierbare zementartige Zusammensetzung nach Anspruch 3, wobei der Schlamm am Ende der Haltezeit innerhalb von 2-6 Sekunden auf eine Temperatur von etwa 200 °C abgekühlt wurde.

5. Hydratisierbare zementartige Zusammensetzung nach einem der vorhergehenden Ansprüche, wobei die Altpapierschlammasche im wesentlichen die Zusammensetzung 19-32,5% (beispielsweise 20,5-31,0%) SiO₂, 12,75-26,25% (beispielsweise 15-22,7%) Al₂O₃, 0,3-3,5% (beispielsweise 0,7-1,1) Fe₂O₃, 30-56% (beispielsweise 34,8-52,2) CaO, 3,3-6,75% (beispielsweise 4,1-6,2) MgO, 0,75-2,5% (beispielsweise 1,1 bis 2,0%) Na₂O, 0,75-2,5% (beispielsweise 1,0-1,6%) K₂O und 0,3-1,9% (beispielsweise 0,8-1,4%) SO₃ aufweist, wobei der Rest andere Oxide, Nebenbestandteile und Verunreinigungen sind.

6. Hydratisierbares zementartiges Material nach einem der vorhergehenden Ansprüche, das einen durchschnittlichen Partikelgrößendurchmesser von weniger als etwa 50 µm (wie beispielsweise weniger als etwa 30 µm) aufweist.

7. Hydratisierbares zementartiges Material nach Anspruch 6, wobei die Partikelgröße sich dieser Bedingung vorzugsweise bei der Bildung der Altpapierschlammasche anpaßt, oder sie durch Mahlen oder Stampfen erhalten werden kann.

8. Hydratisierbares zementartiges Material nach einem der vorhergehenden Ansprüche, wobei die Mischung anfänglich etwa 30 bis 70% (vorzugsweise 40-60%) der Mischung, bezogen auf das Gewicht der Mischung, Altpapierschlammasche, und etwa 70 bis 30% (60%-40%) der Mischung, bezogen auf das Gewicht der Mischung, gemahlene granulierte Hochofenschlacke enthält.

9. Hydratisierbares zementartiges Material nach einem der vorhergehenden Ansprüche, das ferner einen Aktivator enthält, der Portlandzement und/oder eine anorganische Verbindung (wie beispielsweise Natriumcarbonat, Kaliumcarbonat, Natriumsulfat oder Kaliumsulfat) enthalten kann.

10. Hydratisierbares zementartiges Material nach Anspruch 9, wobei die anorganische Verbindung in einer Menge von 0,5 bis 10,0 Gewichts-% der Mischung zugegen ist und/oder Portlandzement in einer Menge von 0,5 bis 25 Gewichts-% der Mischung zugegen ist.

11. Hydratisierbares zementartiges Material nach Anspruch 7, wobei die Mischung etwa 40% Altpapierschlammasche, etwa 40% gemahlene granulierte Hochofenschlacke und etwa 20% Portlandzement enthält, wobei alle Mengen Gewichtsprozente der Mischung sind.

12. Hydratisierbares zementartiges Material nach einem der vorhergehenden Ansprüche, wobei die Mischung ein oder mehrere Zusätze enthält, wie beispielsweise einen Superweichmacher auf Basis eines löslichen Salzes von polymetrischem Naphthalin oder Kalziumsulfat.

13. Hydratisierbares zementartiges Material nach einem der vorhergehenden Ansprüche, das mit Sand (vorzugsweise in einem Verhältnis von etwa 1 Teil zementartigem Material zu etwa 3 Teilen Sand) gemischt ist, um einen Mörtel bereitzustellen.

14. Hydratisierbares zementartiges Material nach einem der vorhergehenden Ansprüche, das mit Sand und Zuschlagstoff (vorzugsweise in dem Verhältnis von etwa 1 Teil Binder: 2 Teilen Sand : 3 Teilen Zuschlagstoff) gemischt ist, um ein Betonmaterial bereitzustellen.

15. Verfahren zur Herstellung einer zementartigen Zusammensetzung, das die Bereitstellung einer hydratisierbaren zementartigen Zusammensetzung nach einem der Ansprüche 1 bis 14 und die Hydratisierung der Mischung beinhaltet.

16. Verfahren nach Anspruch 15, wobei die zementartige Zusammensetzung einer Vibration und/oder äußerem Druck ausgesetzt wird, um einen Formkörper bereitzustellen.

17. Verfahren nach Anspruch 15 oder 16, wobei die hydratisierbare Mischung wassergehärtet oder feuchtigkeitsgehärtet ist.

18. Formkörper, hergestellt durch Hydratisierung einer hydratisierbaren zementartigen Zusammensetzung nach einem der Ansprüche 1 bis 14.

19. Formkörper nach Anspruch 18, der zur Verwendung in der Bauindustrie vorgesehen ist und in Form eines Blocks oder Ziegels vorliegen kann.

20. Verfahren zur Herstellung eines Formkörpers, wobei das Verfahren beinhaltet:
(a) das Bereitstellen eines hydratisierbaren zementartigen Materials nach einem der Ansprüche 1 bis 14;
(b) das Hydratisieren der Mischung;
(c) Formen der Mischung; und
(d) Aushärtenlassen der Mischung.

21. Verfahren nach Anspruch 20, wobei die Mischung Portlandzement enthält.

22. Verfahren nach Anspruch 20 oder 21, wobei das Formen in einer Form durchgeführt wird.

23. Verfahren nach einem der Ansprüche 20 bis 22, wobei das Mischen in einer Form oder in einem separaten Gefäß durchgeführt wird.

24. Verfahren nach einem der Ansprüche 20 bis 23, wobei das Aushärten in der Form oder im Anschluss an die Ausformung durchgeführt wird.

25. Verfahren nach einem der Ansprüche 20 bis 24, wobei die Mischung für mindestens 7 Tage ausgehärtet wird.

26. Verwendung einer Mischung von Altpapierschlammasche und gemahlener granulierter Hochofenschlacke als teilweisen Ersatz für Portlandzement bei der Herstellung von zementartigen Materialien, wobei die Asche hergestellt wird durch Erwärmen von Altpapierschlamm auf eine Verbrennungstemperatur im Bereich von 900 °C bis 1200 °C für eine Haltezeit im Bereich von 1 bis 30 Sekunden, gefolgt von einer Abkühlung des erwärmten Schlamms auf eine Kühltemperatur im Bereich von 170 °C bis 230 °C am Ende der Haltezeit, wobei die Altpapierschlammasche in einer Menge im Bereich von 30 bis 70 Gewichts-% der Zusammensetzung zugegen ist.

27. Verwendung von Altpapierschlammasche als zementartigen Binder bei der Herstellung eines zementartigen Materials umfassend Altpapierschlammasche und gemahlene und granulierte Hochofenschlacke, wobei die Altpapierschlammasche hergestellt wird durch Erwärmen von Altpapierschlamm auf eine Verbrennungstemperatur im Bereich von 900 °C bis 1200 °C für eine Haltezeit im Bereich von 1 bis 30 Sekunden, gefolgt von einer Abkühlung des erwärmten Schlamms auf eine Kühltemperatur im Bereich von 170 °C bis 230 °C am Ende der Haltezeit, wobei die Altpapierschlammasche in einer Menge im Bereich von 30 bis 70 Gewichts-% des zementartigen Materials zugegen ist.

## Revendications

1. Composition cimentaire hydratable qui inclut un mélange de :
(iii) un laitier de haut fourneau en grain broyé en une quantité égale à 30 % à 70 % en poids du mélange ; et
(iv) une cendre de pâte de vieux papiers en une quantité égale à 30 % à 70 % en poids du mélange, la cendre de pâte de vieux papiers étant produite en chauffant la pâte de vieux papiers jusqu'à une température de combustion dans la plage de 900 °C à 1200 °C pour un temps de séjour dans la plage de 1 à 30 secondes, suivi d'un refroidissement de la pâte de vieux papiers jusqu'à une température de refroidissement dans la plage de 170 °C à 230 °C, à la fin du temps de séjour.

2. Composition cimentaire hydratable selon la revendication 1, dans laquelle le temps de séjour est dans la plage de 3 à 5 secondes.

3. Composition cimentaire hydratable selon la revendication 1 ou 2, dans laquelle la pâte de vieux papiers chauffée est refroidie à la température de refroidissement en 2 à 6 secondes, à la fin du temps de séjour.

4. Composition cimentaire hydratable selon la revendication 3, dans laquelle la pâte a été refroidie à une température d'environ 200 °C en 2 à 6 secondes, à la fin du temps de séjour.

5. Composition cimentaire hydratable selon l'une quelconque des revendications précédentes, dans laquelle la cendre de pâte de vieux papiers a sensiblement la composition suivante : 19 à 32,5 % (tel que 20,5 à 31,0 %) de SiO₂, 12,75 à 26,25 % (tel que 15 à 22,7 %) de Al₂O₃, 0,3 à 3,5 % (tel que 0,7 à 1,1) de Fe₂O₃, 30 à 56 % (telle que 34,8 à 52,2) de CaO, 3,3 à 6,75 % (tel que 4,1 à 6,2) de MgO, 0,75 à 2,5 % (tel que 1,1 à 2,0 %) de Na₂O, 0,75 à 2,5 % (tel que 1,0 à 1,6 %) de K₂O, et 0,3 à 1,9 % (tel que 0,8 à 1,4 %) de SO₃, le reste étant composé d'autres oxydes, de divers ingrédients et d'impuretés.

6. Matériau cimentaire hydratable selon l'une quelconque des revendications précédentes, qui a un diamètre de taille de particules moyen inférieur à environ 50 µm (tel que moins d'environ 30 µm).

7. Matériau cimentaire hydratable selon la revendication 6, dans lequel la taille de particules est, de préférence, conforme à cette condition lorsque la cendre de pâte de vieux papiers est formée, ou bien elle peut être obtenue par broyage ou pilonnage.

8. Matériau cimentaire hydratable selon l'une quelconque des revendications précédentes, dans lequel le mélange inclut, à l'origine, environ 30 % à 70 % (de préférence 40 à 60 %) de cendre de pâte de vieux papiers en poids du mélange, et environ 70 % à 30 % (60 % à 40 %) de laitier de haut fourneau en grain broyé en poids du mélange.

9. Matériau cimentaire hydratable selon l'une quelconque des revendications précédentes, qui inclut en outre un activateur qui peut inclure du ciment Portland et/ou un composé inorganique (tel que du carbonate de sodium, du carbonate de potassium, du sulfate de sodium ou du sulfate de potassium).

10. Matériau cimentaire hydratable selon la revendication 9, dans lequel le composé inorganique est présent en une quantité de 0,5 à 10,0 % en poids du mélange et/ou du ciment Portland est présent en une quantité de 0,5 % à 25 % du mélange en poids.

11. Matériau cimentaire hydratable selon la revendication 7, dans lequel le mélange inclut environ 40 % de cendre de pâte de vieux papiers, environ 40 % de laitier de haut fourneau en grain broyé et environ 20 % de ciment Portland, toutes les quantités étant données en pourcentages en poids du mélange.

12. Matériau cimentaire hydratable selon l'une quelconque des revendications précédentes, dans lequel le mélange inclut un ou plusieurs additif(s), tel qu'un superplastifiant à base de sel soluble de naphtalène polymérisé ou de sulfate de calcium.

13. Matériau cimentaire hydratable selon l'une quelconque des revendications précédentes, qui est mélangé avec du sable (de préférence, dans les proportions d'environ 1 part de matériau cimentaire pour environ 3 parts de sable) de façon à fournir un mortier.

14. Matériau cimentaire hydratable selon l'une quelconque des revendications précédentes, qui est mélangé avec du sable et des agrégats (de préférence dans les proportions d'environ 1 part de liant / 2 parts de sable / 3 parts d'agrégats) de façon à fournir un matériau constituant de béton.

15. Procédé de fabrication d'une composition cimentaire qui inclut la fourniture d'une composition cimentaire hydratable selon l'une quelconque des revendications 1 à 14, et l'hydratation du mélange.

16. Procédé selon la revendication 15, dans lequel la composition cimentaire est soumise à des vibrations et/ou à une pression extérieure de façon à fournir un corps formé.

17. Procédé selon la revendication 15 ou 16, dans lequel le mélange hydraté est durci à l'eau ou durci à l'humidité.

18. Corps formé qui est fabriqué grâce à l'hydratation d'une composition cimentaire hydratable selon l'une quelconque des revendications 1 à 14.

19. Corps formé selon la revendication 18, utilisé dans l'industrie du bâtiment et qui peut se trouver sous la forme d'un bloc ou d'une brique.

20. Procédé de fabrication d'un corps formé, lequel procédé inclut :
(a) la fourniture d'un matériau cimentaire hydratable selon l'une quelconque des revendications 1 à 14 ;
(b) l'hydratation du mélange ;
(c) le mise en forme du mélange ; et
(d) le durcissement du mélange.

21. Procédé selon la revendication 20, dans lequel le mélange inclut du ciment Portland.

22. Procédé selon la revendication 20 ou 21, dans lequel la mise en forme est effectuée dans un moule.

23. Procédé selon l'une quelconque des revendications 20 à 22, dans lequel le mélange est effectué dans un moule ou dans un récipient séparé.

24. Procédé selon l'une quelconque des revendications 20 à 23, dans lequel le durcissement est effectué dans le moule ou après le démoulage.

25. Procédé selon l'une quelconque des revendications 20 à 24, dans lequel le mélange est durci pendant au moins 7 jours.

26. Utilisation d'un mélange de cendre de pâte de vieux papiers et de laitier de haut fourneau en grain broyé, en remplacement partiel de ciment Portland, dans la fabrication de matériaux cimentaires, laquelle cendre est produite en chauffant la pâte de vieux papiers jusqu'à une température de combustion dans la plage de 900 °C à 1200 °C, pour un temps de séjour dans la plage de 1 à 30 secondes, suivi d'un refroidissement de la pâte chauffée à une température de refroidissement dans la plage de 170 °C à 230 °C, à la fin du temps de séjour, dans laquelle la cendre de pâte de vieux papiers est présente en une quantité dans la plage de 30 % à 70 % en poids de la composition.

27. Utilisation de cendre de pâte de vieux papiers comme liant cimentaire dans la fabrication d'un matériau cimentaire comprenant de la cendre de pâte de vieux papiers et de laitier de haut fourneau en grain broyé, dans lequel la cendre de pâte de vieux papiers est produite en chauffant la pâte de vieux papiers jusqu'à une température de combustion dans la plage de 900 °C à 1200 °C, pour un temps de séjour dans la plage de 1 à 30 secondes, suivi d'un refroidissement de la pâte chauffée à une température de refroidissement dans la plage de 170 °C à 230 °C, à la fin du temps de séjour, dans lequel la cendre de pâte de vieux papiers est présente en une quantité dans la plage de 30 % à 70 % en poids du matériau cimentaire.
